# EUROPEAN PATENT APPLICATION

(11) **EP 3 753 437 A1**
(43) Date of publication of application: **23.12.2020**
(21) Application number: 20188090.3
(22) Date of filing: 22.09.2014
(51) Int. Cl.: A43C 11/00, A44B 11/00, A44B 11/20, A43C 11/22

(54) **FASTENING DEVICE**

(30) Priority: 20.09.2013 US 201361880204 P; 30.09.2013 US 201361884840 P; 04.11.2013 US 201361899445 P
(62) Divisional of application: 19160726.6
(71) Applicant: Hickies, Inc., Brooklyn, NY 11249 (US)
(72) Inventor: FRYDLEWSKI, Gaston, Brooklyn, NY 11211 (US); WAINGARTEN, Maria Raquel, Brooklyn, NY 11211 (US); REEB, David, Sykesville, NY 21784 (US)
(74) Representative: Westphal, Mussgnug & Partner Patentanwälte mbB

(57) **Abstract**

The present invention is directed to a fastening device (1A, 1B; 100A, 100A') for connecting two identified openings (3), the fastening device (1A) comprising: an elongated main body member (4, 4A) defining a longitudinal axis, the main body member (4, 4A) having a first end portion and a second end portion at opposite ends of the longitudinal axis; and a first tip end portion (5, 5A) located at the first end portion of the main body member (4, 4A) and a second tip end portion (5, 5A) located at the second end portion of the main body member (4, 4A), the first and second tip end portions (5, 5A) each having an outer dimension configured to pass through one of the identified openings (3).

## Description

### TECHNICAL FIELD

The present invention relates generally to fastening devices and systems using the fastening devices. More particularly, the present invention provides fastening devices that secure opposing sides of an article selected for securing allowing secure engagement and reliability against unintended separation and breakage.

### BACKGROUND

Industrial applications of fastening devices include the use of thread or string, including shoe laces. Unfortunately, during use, particularly during rough sports play or hard work activities, these conventional fastening devices are often broken, shred, or become unreliable, or even dangerous to users.

From WO 2013/066004 A1 an easy tying device for shoestrings is known. The easy tying device for shoe strings includes a shoestring member applied to shoes or sneakers to tie shoestrings so that the shoes or sneakers are firmly worn on the feet, wherein the shoestring member has a predetermined length and coupling holes in both ends thereof, and a hook member inserted into and couples to the coupling hole of the shoe string member and inserted, hooked, and fixed into a shoe string tying hole of the shoes or sneakers.

From BE 481.867 and US 4,144,621 further fastening devices for shoestrings are known.

These fastening devices may comprise an elongated main body member defining a longitudinal axis, the main body member having a first end portion and a second end portion at opposite ends of the longitudinal axis; and a first tip end portion located at the first end portion of the main body member and a second tip end portion located at the second end portion of the main body member, the first and second tip end portions each having an outer dimension configured to pass through one of the identified openings.

In a relaxed state, the first and second tip end portions extend substantially orthogonal to the longitudinal axis, and wherein the first and second tip end portions are each elastically pivotable with respect to the main body member about the longitudinal axis to permit passage of the respective tip end portion through one of the identified openings.

Accordingly, there is a need for an improved fastening device that provides an improved reliability and use. Further, there is also a need to improve a method of using a fastening device where the installation and application of a fastening device allows an adaptive use to a variety of alternative engagements with articles requiring fastening.

### SUMMARY

In response, it is now recognized that there is a need for a higher performance fastening system that adapts to a user's needs and is durable and tough in use.

Any embodiment of the invention comprises the features of claim 1, including, an elongated main body member defining a longitudinal axis, the main body member having a first end portion and a second end portion at opposite ends of the longitudinal axis; and a first tip end portion located at the first end portion of the main body member and a second tip end portion located at the second end portion of the main body member, the first and second tip end portions each having an outer dimension configured to pass through one of the identified openings. According to the invention, in a relaxed state, the first and second tip end portions extend substantially orthogonal to the longitudinal axis, and wherein the first and second tip end portions are each elastically pivotable with respect to the main body member about the longitudinal axis to permit passage of the respective tip end portion through one of the identified openings.

In another embodiment, a method of connecting two identified openings can include: providing a fastening device with the features of claim 1; inserting the first tip end portion through one of the identified openings; flexing the first tip end portion with respect to the main body member, thereby permitting passage of the first tip end portion through the one of the identified openings; relaxing the first tip end portion; inserting the second tip end portion through the other of the identified openings; flexing the second tip end portion with respect to the main body member, thereby permitting passage of the second tip end portion through the other of the identified openings; and relaxing the second tip end portion; whereby when the first and second tip end portions are in the relaxed state, they engage the two identified openings with the main body member between the two identified openings.

The above and other aspects, features and advantages of the present invention will become apparent from the following description read in conjunction with the accompanying drawings, in which like reference numerals designate the same elements.

### BRIEF DESCRIPTION OF THE DRAWINGS

Fig. 1 is a perspective view of a single fastening device according to an aspect of the present invention.
Fig. 2 is a side elevation view of Fig. 1.
Fig. 3 is a side elevation view of Fig. 1.
Fig. 4 is another side elevation view of Fig. 1.
Fig. 5 is a top view of Fig. 1 noting the position of alternative openings and pin members.
Fig. 6 is a cross section along Section 6-6 in Fig. 1 .
Fig. 7 is a cross section along Section 7-7 in Fig. 1 .
Fig. 8 is a view of the fastening device in Fig. 1 noting the flexibility of the neck region allowing the tip end portion to rotate relative to a long axis direction of a main body.
Fig. 9 is a perspective use view wherein the tip end portion is pushed partially through an eyelet opening of an exemplary sneaker member in a first assembly step.
Fig. 10 is a perspective use view wherein the tip end of a first fastening device is positioned through an eyelet and awaiting interfit connection with a second fastening device partially through an opposing eyelet.
Fig. 11 is a perspective view of a fastening system in position during a use wherein pins and openings are adjustably positionable along the length of respective fastening devices.
Fig. 12 is a cross section along Section 12-12 in Fig 11.
Fig. 13 is a cross section along Section 13-13 in Fig. 11.
Fig. 14 is an alternative insertion method step from an opposite side of an eyelet opening.
Fig. 15 is a further method step of positioning and then folding over a fastening device in preparation of meeting with a corresponding fastening device for engaging interfit therewith forming one optional fastening system.
Fig. 16 is a perspective view of an alternative embodiment of the present invention providing an extending toggle system on an adapted fastening system.
Fig. 17 is a front elevation plan view of Fig. 16 noting the main body and opposing toggle system and tip end.
Fig. 18 is a section view along section line 18-18 in Fig. 16.
Fig. 19 is a top plan view of Fig. 16 noting the extension of the opposed toggle system and tip end.
Fig. 20 is a top slight-perspective view of two interconnected but removably positionable fastening systems as in Fig. 16, wherein the interconnected system is shown under tension "T" from opposing tip ends where the interconnected fastening systems flex under tension to securely engage therebetween.
Fig. 21 is a perspective view as in Fig. 20, noting the flex in the main body and toggle necks during interengagement tension.
Fig. 22 is a further view similar to Fig. 20 noting the flex during engagement.

### DETAILED DESCRIPTION

Reference will now be made in detail to embodiments of the invention. Wherever possible, same or similar reference numerals are used in the drawings and the description to refer to the same or like parts or steps. The drawings are in simplified form and are not to precise scale. The word "couple," "interfit," "connect" and similar terms do not necessarily denote direct and immediate connections, but also include connections through intermediate elements or devices. For purposes of convenience and clarity only, directional (up/down, etc.) or motional (forward/back, bend/fold, push/pull, etc.) terms may be used with respect to the drawings. These and similar directional terms should not be construed to limit the scope in any manner. It will also be understood that other embodiments may be utilized without departing from the scope of the present invention, and that the detailed description is not to be taken in a limiting sense, and that elements may be differently positioned, or otherwise noted as in the appended claims without requirements of the written description being required thereto.

Various operations may be described as multiple discrete operations in turn, in a manner that may be helpful in understanding embodiments of the present invention; however, the order of description should not be construed to imply that these operations are order dependent.

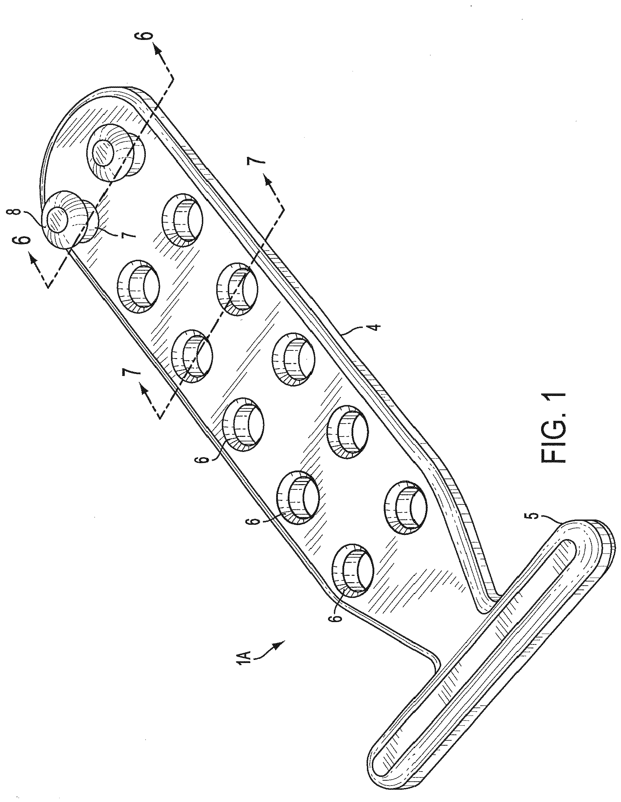

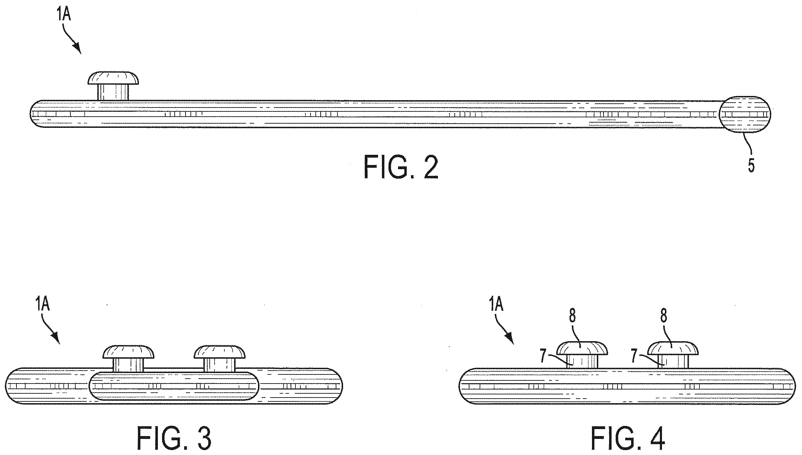

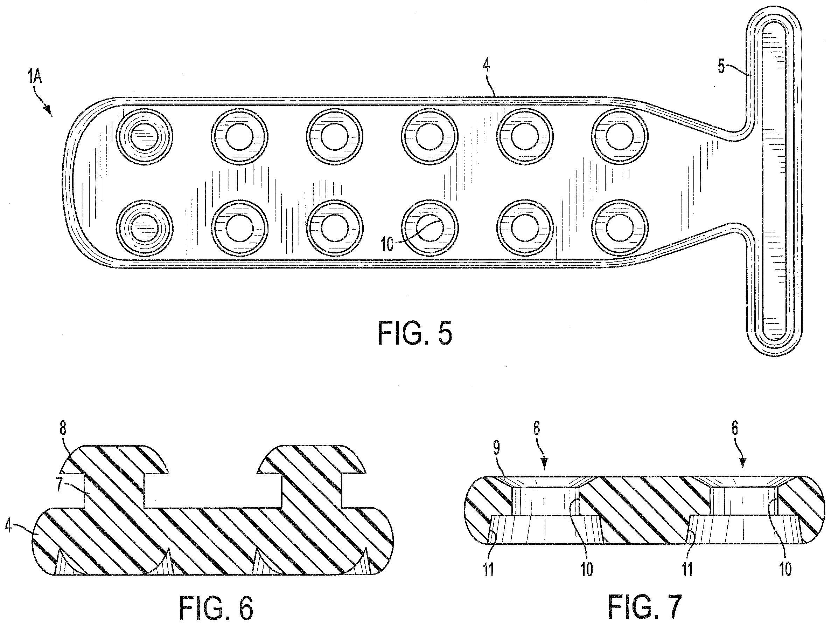

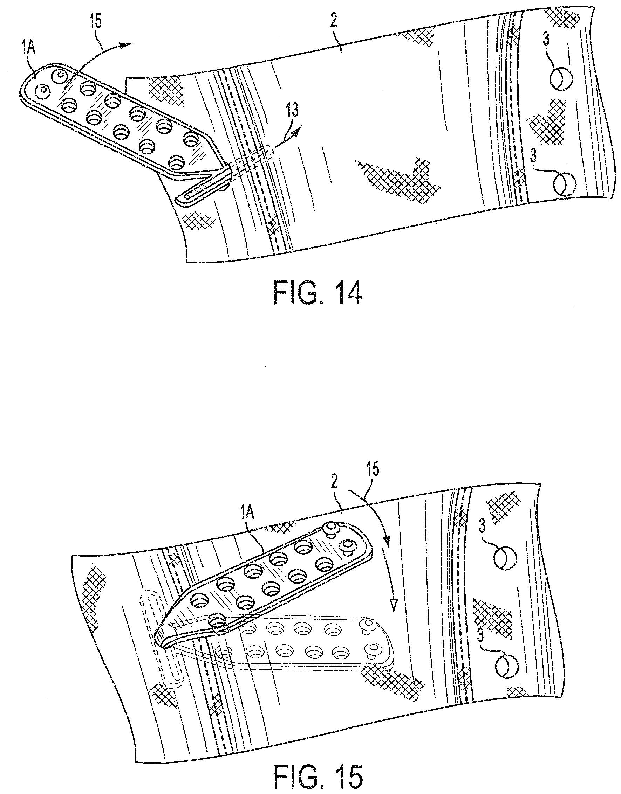

Referring now to Figs. 1 through 15, a fastening system 100 may include a first and a second fastening device, respectively, shown at 1A and IB. Each fastening device 1A, IB includes a tip end portion 5 and a main body portion 6, which may adaptively be used to secure respective eyelet openings (identified openings) 3 of a shoe 2 therebetween. (See e.g., Figs. 14 and 15.)

Each main body member 4 can include a plurality of operative openings 6 and at least one pin member 7, preferably having a respective tail 8. It is noted that for openings 6 and pin members 7, tails 8 have cooperative interference fitting geometry, including respective sizes. Tails 8 may be excluded, or pin members 7 and tails 8 may be formed in different shapes, as well as openings 6 wherein the interfitting geometry may be enhanced. For a nonlimiting example, tails 8 are shown as larger in outer dimension than pins 7 so that, following passage through an opening 6, the outer surfaces of tails 8 may positively contact formed inner flat surfaces of openings 6 in a manner preventing easy disassembly under stress and tension. According to alternative embodiments, the components 1A and IB can be a single monolithic member.

It will be understood, that openings 6 and pins 7, and tails 8 may be formed in a generally circular manner (as shown) but that there is no restriction thereto. For example, opening 6 may be triangular, as may pin 7 while tails 8 may remain semi-circular. In this way, it will be understood that geometric interference fitting may use adaptive and alternative geometries without departing from the scope and spirit of the present invention.

In this way it will be understood that openings 6 can include, optionally, a central passage 10 having the same diameter as pins 7, and a sloped or angled opening 9 with sloped side walls to ease insertion of tails 8, and a secure wall 11 arrangement, shown here with a flat surface for parallel engagement with the underside surface of tails 8. In this way the openings 6 and pins 7 provide an interoperability and secure interference fitting to secure respective fastening devices 1A, IB together.

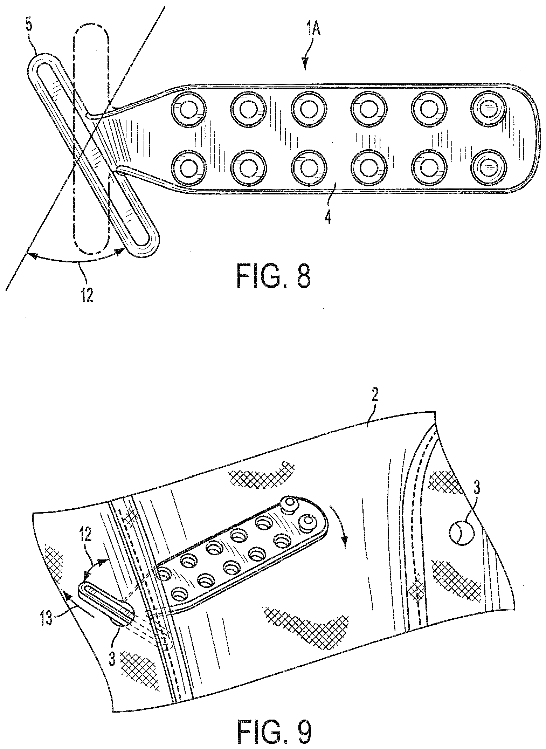

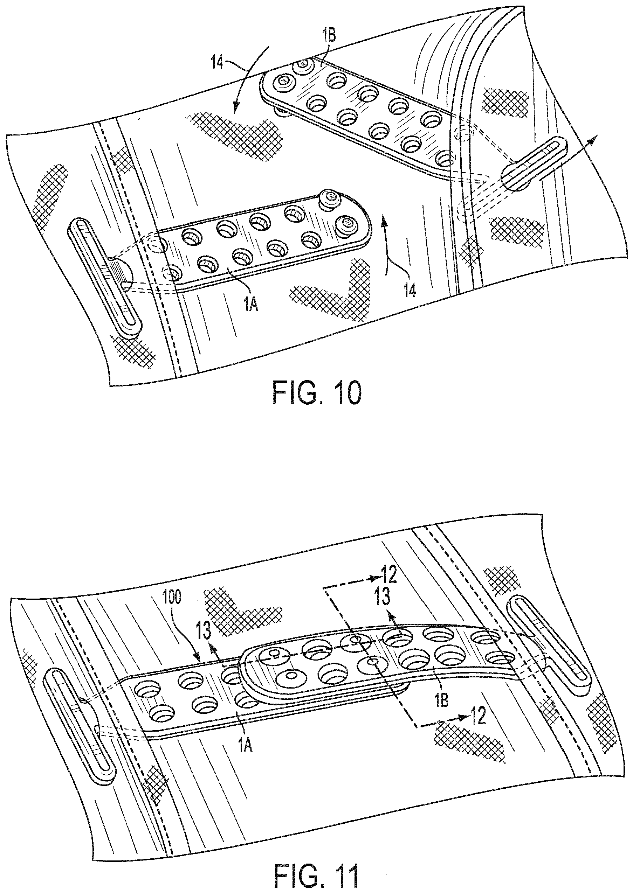

Referring now specifically to Figs. 8 to 15, two alternative methods of use can be provided. A first method in Figs. 8-11 shows the use of the tip end entering eyelet opening 3 by initially tilting relative to the main body member 4 an angle 12 allowed by the flexible neck portion between main body member 4 and tip end portion 5. Tip end portion 5 may be pushed or pulled through eyelet opening 3 and is operably sufficiently flexible to accommodate this embodiment. The same procedure is provided on the other side of the shoe. As a result, the interfitting shown in Figs. 10 and 1 is provided by swinging and urging together 14 for pins 7, and tails 8 are pushed through and into openings 6. During use, and to fit a user's preference, the main bodies may be separated, re-aligned, and re-connected.

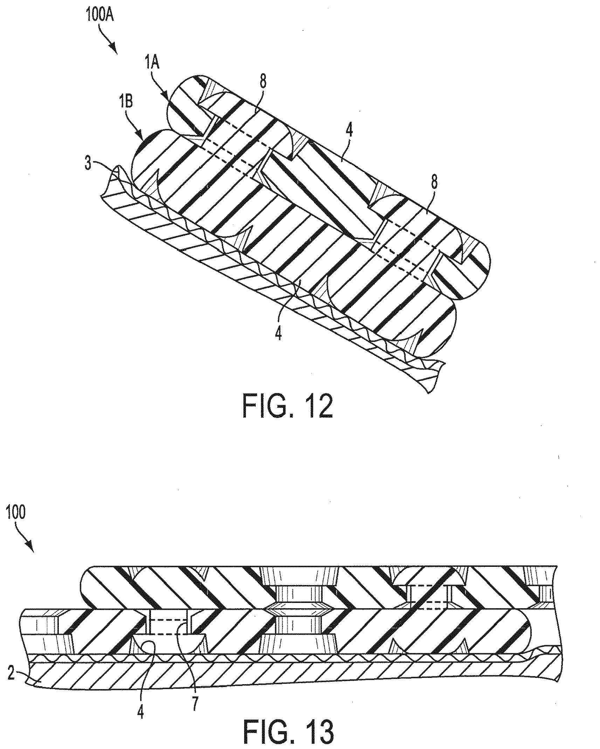

Referring now particularly to Figs. 14 and 15, an alternative method is provided. Here, tip end portions 5 are pushed from the outward side of eyelet openings 3 toward the inner side, and then pivoted along bend 15 to reach the center region of shoe 2. When completed from both sides, the fastening devices 1A and IB will be aligned as shown in Figs. 12, 13 and interfitted. It will be noted that the neck region between tip end portion 5 and main body 4 is sufficiently flexible to accommodate this operation.

It will be understood that the fastening system 100 and the respective fastening devices 1 A, 1 B may be alternatively referred to as means for fastening or fastening means, without departing from the scope of the present invention.

It will be further understood, that the present fastening system 100 may be shown with two-rows of openings 6, but may alternatively be shown with only a single-row of openings 6 e.g., a narrower main body member 4. It will be also understood that either one or both of the main body member 4 and tip end 5 portion may be formed of silicone, a resilient material, or may additionally include a stiffening member therein. For example, the tip end portion 5 may be stiffened with a molded pin located therein. This may help with the insertion of the tip end portion 5 through the eyelet openings 3 and/or aid the rotation of tip end portion 5 relative to main body member 4. It will also be understood that the main body member 4 may be made with any type of opening and pin geometry without departing from the claimed invention. It will also be understood that components 1A and IB can be found as a unitary, monolithic component.

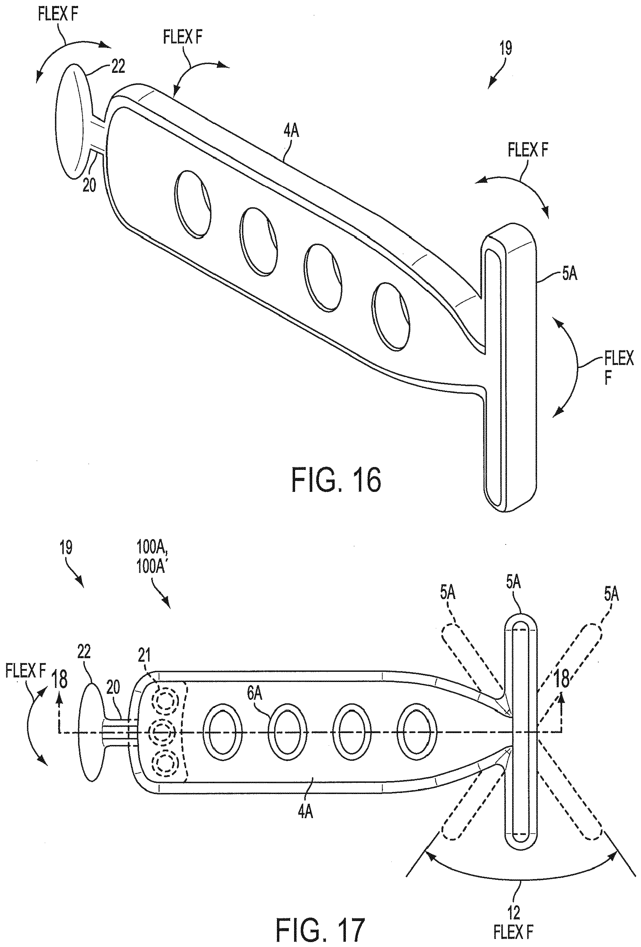

Referring now to Figs. 16-23, a fastening device is provided as two adaptively engageable alternative fastening systems 100A, 100A' each with an opposing tip end portion 5A from a toggle system 19 spaced by a flexible main body portion 4A with a plurality of engaging regions 6A, shown here but not limited to, openings. While regions 6A are shown as ovoidal, circular, or irregular openings, nothing herein is so limiting, and main body portion 4A may be provided with any geometric engagement portion suitable for engaging respective toggle system 19 portions during a use. For example, extending grippers (not shown) may engage opposite sides of toggle 22 extending from a toggle neck 20 from an embedded toggle anchor system 21 integrally formed with main body portion 4A, respectively.

Toggle system 19 can include a toggle neck 20 spacing, a toggle anchor system 21, shown molded into main body 4A, and an opposed tip end 5 A, as shown.

Toggle anchor system 21 may be in any convenient shape sufficient to secure flexible toggle neck 20 to main body portion 4A and to allow a flexibility F during a use thereof. It is envisioned, but not required, that toggle anchor system 21 be co-molded with flexible main body 4A, but may alternatively be secured thereto in a non-removable manner without departing from the claimed invention.

As noted with the earlier embodiment, tip end portion 5 A may be flexible F to allow interfitting as noted in Figs. 14 and 15 discussed earlier. In this manner, during a use, respective fastening systems 100A, 100A' allow flexible engagement of opposed eyelet openings 3, 3 of shoe 2, such that all earlier discussion of such flexibility is additionally incorporated herein by reference for convenience. According to alternative embodiments, components 100A, 100A' can comprise a single, unitary component.

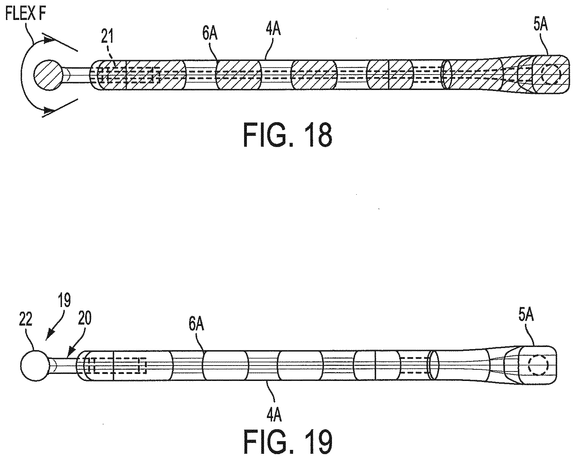

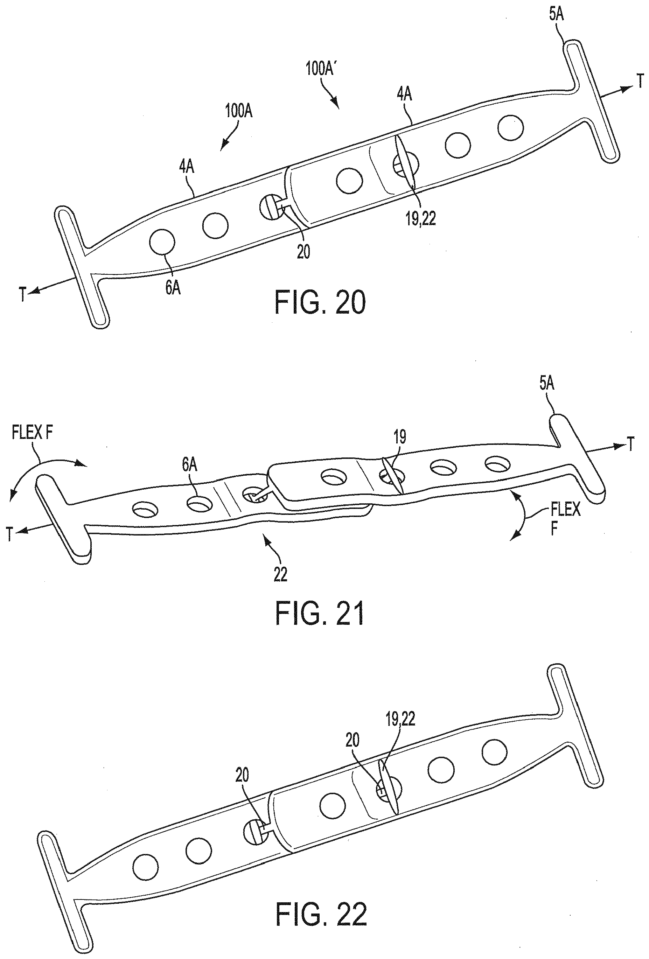

As noted in Figs. 18 and 19, openings 6A penetrate flexible main body portion 4A, in a preferably ovoidal manner so that under tension T (Fig. 20), openings flex in to a narrower (from the width direction) dimension to engage and secure toggle neck portions 20 to prevent unintended removal thereof.

During a use, as for example in replacing the images in Figs. 14 and 15, toggle systems 19 engage with respective openings 6 A of main body portions 4A and may be adjusted to fit in any opening. Thus, during use under tension T, there is a best-fit flexing well shown in Fig. 21, where there is a slight flexing of main bodies 4A, 4A to accommodate the tension T thereby and to also flex respective toggle necks 20 and thereby secure respective fastening systems 100A, 100A'.

It will additionally be understood, that any suitable material to perform the functions herein may be used, without limitation thereto. For example, the toggle system 19 may be thermoplastic, high density or mid-density plastic (all flexible), rigid metal, wood, or any other suitable material for such a toggle. Additionally, the tip end portion 5A may be reinforced with an internal rigid member that may be slightly flexible (e.g., HDPE, etc.) or fully rigid (e.g., metal, plastic etc.).

As mentioned before, embodiments can comprise an elongated unitary or one-piece body having respective first and second ends. Each end can terminate in a tip portion which has a cross-section that permits the tip to be inserted through the eyelet for which it is intended. The tip can be of a length suitable for grasping with the fingers. According to an embodiment, interposed between, and connecting the tip portion and the elongate body can be a resilient, deformable region that circumscribes and defines an opening. The deformable region may have a circular shape and define a substantially circular opening, but according to embodiments, it is arc-shaped and defines an arc-shaped opening. The convex side of the arc can be oriented toward the body, while the concave side can be oriented toward the tip portion.

In use, the tip may be inserted through an eyelet, and then grasped and pulled so as to apply tension substantially along the long axis of the device. This tension can cause the deformable region, and the opening it defines, to stretch along the long axis of the device. The tension and resulting deformation can cause the sides of the deformable region to move toward the axis, reducing the effective cross-section of the deformable region until it can pass through the eyelet. Upon release of the tension, the deformable region rebounds to its relaxed state, in which it no longer can fit through the eyelet. The process is repeated with the second end portion of the device, by pulling it through a second eyelet of the article to be fastened, or through an eyelet of a second article which the practitioner wishes to attach to the first article.

The fastening tension provided by an installed device of the invention is borne by the central body of the device. At the eyelets, this tension is created by an outward-directed force applied axially to the deformable regions, at the point where contact is made with the surface of the article immediately surrounding the eyelets. According to embodiments, this outward force does not cause a reduction in cross-section of the deformable region, however, and the device resists being pulled through the eyelet. In embodiments, where the deformable region and the opening it defines are arc-shaped, the deformable region can be particularly resistant to compression because the inner portion of the arc, adjacent to the tip, is situated within the radius of the outer portion of the arc, where it physically blocks the deformation required for a reduction in cross-section. Although resistant to being pulled through the eyelet in the inward direction, the device can readily be removed by pulling on the tip in the outward direction, thereby reversing the installation process.

For ease and economics of manufacture, embodiments of the invention can be molded from a single elastomeric material. Suitable materials include, but are not limited to, synthetic rubbers, silicone rubbers and polyurethanes. In devices having such monolithic construction, the desired amount of stretch or rigidity in any particular portion of the device will be obtained by varying the thickness of that portion. In alternative embodiments, strengthening or stiffening elements may be inserted, laminated, or molded into the elastomer. Such elements include, but are not limited to, monofilament, spun, or woven fiber reinforcement materials, rigid or semi-rigid inserts, and elastomeric inserts or layers having a different modulus and/or elasticity. The devices may also be formed directly from two or more different materials, for example by bi-injection or two-shot injection molding, so as to have the desired distribution of physical properties along the length of the device. Embodiments may be made by 3D printing or additive manufacturing.

## Claims

1. A fastening device (1A, 1B; 100A, 100A') for connecting two identified openings (3), the fastening device (1A) comprising:
an elongated main body member (4, 4A) defining a longitudinal axis, the main body member (4, 4A) having a first end portion and a second end portion at opposite ends of the longitudinal axis; and
a first tip end portion (5, 5A) located at the first end portion of the main body member (4, 4A) and a second tip end portion (5, 5A) located at the second end portion of the main body member (4, 4A), the first and second tip end portions (5, 5A) each having an outer dimension configured to pass through one of the identified openings (3);
wherein in a relaxed state, the first and second tip end portions (5, 5A) extend substantially orthogonal to the longitudinal axis, and wherein the first and second tip end portions (5, 5A) are each elastically pivotable with respect to the main body member (4, 4A) about the longitudinal axis to permit passage of the respective tip end portion (5, 5A) through one of the identified openings (3),
wherein the main body member (4, 4A) comprises first (1A, 100A) and second (1B, 100B) portions releasably connected to one another,
wherein either
each of the first portion (1A) and the second portion (1B) includes a plurality of operative openings (6) and at least one pin member (7) having a respective tail (8), wherein for openings (6) and pin members (7), tails (8) have cooperative interference fitting geometry, including respective sizes, or
each of the first portion (100A) and the second portion (100A') comprising the opposing tip end (5A) from a toggle system (19) spaced by the flexible main body portion (4A) with a plurality of openings (6A), the toggle system (19) being in any convenient shape sufficient to secure a flexible toggle neck (20) to main body (4A) and to allow a flexibility (F) during a use thereof.

2. The fastening device (1A, 1B; 100A, 100A') according to claim 1, wherein the fastening device (1A, 1B; 100A, 100A') is symmetrical about the longitudinal axis.

3. The fastening device (1A, 1B; 100A, 100A') according to claim 1, wherein:
the fastening device (1A, 1B; 100A, 100A') is made of an elastic material to allow for flexing in at least two dimensions.

4. The fastening device according (1A, 1B; 100A, 100A') to claim 1, wherein:
each of the first and second tip end portions (5, 5A) includes a stiffening member located therein.

5. The fastening device (1A, 1B; 100A, 100A') according to claim 1, wherein each of the first and second tip end portions (5, 5A) includes a first portion that extends to one side of the longitudinal axis of the main body member (4, 4A) and a second portion that extends to an opposite side of the longitudinal axis of the main body member (4, 4A).

6. The fastening device(1A, 1B; 100A, 100A') according to claim 1, wherein the fastening device (1A, 1B; 100A, 100A') further includes a first neck region that is disposed in between the main body member (4, 4A) and the first tip end portion (5, 5A) and a second neck region that is disposed in between the main body member (4, 4A) and the second tip end portion (5, 5A), the neck region having a width that is less than a width of the main body member (4, 4A).

7. The fastening device (1A, 1B; 100A, 100A') according to claim 2, wherein the fastening device has two different axes of symmetry.

8. The fastening device (1A, 1B; 100A, 100A') according to claim 1, wherein the elongated main body (4, 4A), the first end portion, the second end portion, the first tip end portion (5, 5A), and the second tip end portion (5, 5A) are a single, unitary device.

9. A method of connecting two identified openings, comprising:
providing a fastening device (1A, 1B; 100A, 100A') according to any of claims 1-8;
inserting the first tip end portion (5, 5A) through one of the identified openings (3);
flexing the first tip end portion (5, 5A) with respect to the main body member (4, 4A), thereby permitting passage of the first tip end portion (5, 5A) through the one of the identified openings (3);
relaxing the first tip end portion (5, 5A);
inserting the second tip end portion (5, 5A) through the other of the identified openings (3);
flexing the second tip end portion (5, 5A) with respect to the main body member (4, 4A), thereby permitting passage of the second tip end portion (5, 5A) through the other of the identified openings (3); and
relaxing the second tip end portion (5, 5A);
whereby when the first and second tip end portions (5, 5A) are in the relaxed state, they engage the two identified openings (3) with the main body member (4, 4A) between the two identified openings (3).

10. The method of claim 9, further comprising pulling at least one of the first tip end portion (5, 5A) or the second tip end portion (5, 5A) in an outward direction, thereby reversing the installation process.
